# EUROPÄISCHE PATENTSCHRIFT

(11) **EP 2 494 326 B1**
(45) Veröffentlichungstag und Bekanntmachung des Hinweises auf die Patenterteilung: **19.03.2014**
(21) Anmeldenummer: 10762673.1
(22) Anmeldetag: 07.10.2010
(51) Int. Cl.: G01L 7/10, G01L 19/06

(54) **DRUCKSENSOR, INSBESONDERE DIFFERENZDRUCKSENSOR, MIT MEMBRANBETT**
PRESSURE SENSOR, ESPECIALLY DIFFERENTIAL PRESSURE SENSOR, COMPRISING A MEMBRANE BED
CAPTEUR DE PRESSION, NOTAMMENT CAPTEUR DE PRESSION DIFFÉRENTIELLE, À LIT DE MEMBRANE

(30) Priorität: 30.10.2009 DE 102009046229
(43) Veröffentlichungstag der Anmeldung: 05.09.2012
(73) Patentinhaber: Endress+Hauser GmbH+Co. KG, 79689 Maulburg (DE)
(72) Erfinder: KOBER, Timo, 63128 Dietzenbach (DE); PHILIPPS, Michael, 79539 Lörrach (DE); STOLZE, Dieter, 14469 Potsdam (DE); THAM, Anh, Tuan, 10243 Berlin (DE); WERTHSCHÜTZKY, Roland, 14532 Kleinmachnow (DE)
(74) Vertreter: Andres, Angelika Maria
(86) Internationale Anmeldenummer: PCT/EP2010/064983
(87) Internationale Veröffentlichungsnummer: WO 2011/051089

(56) Entgegenhaltungen:
- DE-A1-102006 058 927

## Beschreibung

Die vorliegende Erfindung betrifft einen Drucksensor, insbesondere einen Differenzdrucksensor.

Drucksensoren umfassen einen Grundkörper, eine Messmembran und einen Wandler, wobei die Messmembran an dem Grundkörper befestigt ist, wobei die Messmembran mit mindestens einem Druck beaufschlagbar ist und eine druckabhängige elastische Verformung aufweist, und wobei der Wandler ein von der Verformung der Messmembran abhängiges elektrisches Signal bereitstellt, wobei der Grundkörper ferner ein Membranbett aufweist, an welchem die Messmembran im Falle einer Überlast anliegt, um die Messmembran abzustützen.

Dabei ist es vorteilhaft, wenn das Membranbett eine Kontur annähernd der natürlichen druckabhängigen Verformung, der so genannten Biegelinie, aufweist. Die Schwierigkeit besteht jedoch darin, ein solches Membranbett reproduzierbar und kostengünstig herzustellen.

Die Gestaltung des Bettes sowie dessen Herstellung hängen davon ab, welches Material das Membranbett und das Substrat, welches das Membranbett trägt, aufweist, und was für eine Verbindungstechnik des Grundkörpers bzw. des Membranbetts mit der Membran gewählt wird.

Differenzdrucksensoren sind insbesondere Si-Grundkörper geeignet, da diese dem statischem Druck gut standhalten. Für die Verbindung von zwei Siliziumscheiben gibt es verschiedene Verfahren, wie z.B. eutektisches Bonden oder Siliziumdirektbonden. Angesichts der Anforderungen nach einer hermetisch dichten, festen und trotzdem rückwirkungsarmen Verbindung der Komponenten liefern diese Bondverfahren nach dem Stand der Technik eine noch verbesserungsfähige Ausbeute und Reproduzierbarkeit. Zudem ist die Herstellung von beispielsweise sphärischen konkaven Betten nach US7360431 B2 von YAMATAKE in Silizium nicht ohne weiteres möglich. Bekannt sind derzeit entweder die nicht etablierten Methoden der Graustufenlithographie oder ein direktes Schleifen/Polieren des Siliziums, was nur unter großem Aufwand zu reproduzierbaren Ergebnissen führt.

Die Schrift DE 10 2006 058 927 offenbart ähnliche Drucksensoren.

Die noch unveröffentlichte Patentanmeldung DE 102008043171 offenbart einen Drucksensor, umfassend mindestens einen Grundkörper mindestens eine Messmembran und einen Wandler, wobei die Messmembran ein Halbleitermaterial (insbesondere Silizium) aufweist, wobei die Messmembran unter Einschluss einer Druckkammer an dem Grundkörper befestigt ist, wobei die Messmembran mit mindestens einem Druck beaufschlagbar ist und druckabhängig elastisch verformbar ist, wobei der Wandler ein von der Verformung der Messmembran abhängiges elektrisches Signal bereitstellt, wobei der Grundkörper ein Membranbett aufweist, an welchem die Messmembran im Falle einer Überlast anliegt, um die Messmembran abzustützen dadurch gekennzeichnet, dass das Membranbett eine Glasschicht aufweist, deren Oberfläche der Messmembran zugewandt ist, und eine Wand der Druckkammer bildet. Die Oberfläche der Glasschicht ist insbesondere mit einer Kontur versehen, die geeignet ist, die Messmembran im Falle einer Überlast abzustützen. Hierzu kann die Oberfläche der Glasschicht mikromechanisch bearbeitet sein. Die Glasschicht kann ebenfalls eine Oberflächenkontur aufweisen, die mittels Heißprägen präpariert ist. Weiterhin offenbart diese Patentanmeldung es sei vorteilhaft, wenn das Membranbett eine Oberflächenkontur aufweist, welche der Biegelinie der Messmembran angenähert ist oder dieser entspricht.

Wenngleich diese Vorgehensweise zu zufrieden stellenden Ergebnissen hinsichtlich der Qualität der Membranbetten führt, sind noch Alternativen zu den solchermaßen hergestellten Drucksensoren gewünscht.

Die Aufgabe der Erfindung besteht darin, einen Drucksensor, insbesondere einen Differenzdrucksensor und ein Verfahren zu seiner

Herstellung bereitzustellen, das mit verbesserter Ausbeute und verbesserter Reproduzierbarkeit kostengünstig durchgeführt werden kann.

Die Aufgabe wird erfindungsgemäß gelöst durch den Drucksensor gemäß dem unabhängigen Patentanspruch 1, und die Verfahren gemäß den unabhängigen Patentansprüchen 7 und 10.

Der erfindungsgemäße Drucksensor umfasst mindestens einen Grundkörper, mindestens eine Messmembran, und einen Wandler, wobei die Messmembran ein Halbleitermaterial aufweist, wobei die Messmembran unter Einschluss einer Druckkammer an dem Grundkörper befestigt ist, wobei die Messmembran mit mindestens einem Druck beaufschlagbar ist und druckabhängig elastisch verformbar ist, wobei der Wandler ein von der Verformung der Messmembran abhängiges elektrisches Signal bereitstellt, wobei der Grundkörper ein Membranbett aufweist, an welchem die Messmembran im Falle einer Überlast anliegt, um die Messmembran abzustützen, wobei das Membranbett eine Glasschicht aufweist, deren Oberfläche der Messmembran zugewandt ist, und eine Wand der Druckkammer bildet, wobei die Oberfläche der Glasschicht eine Kontur aufweist, die geeignet ist, die Messmembran im Falle einer Überlast abzustützen, dadurch gekennzeichnet, dass die Kontur des Membranbetts erhältlich ist durch Durchbiegen eines nicht unterstützten Bereichs einer Glasplatte, welche die Glasschicht bildet, bei erhöhter Temperatur aufgrund der Schwerkraft des nicht unterstützten Bereichs der Glasplatte und anschließendem Abkühlen der Glasplatte,
wobei der Grundkörper einen Substratkörper aufweist, der eine der Glasschicht zugewandte Oberfläche aufweist, welche die Glasschicht unterstützt, wobei in der Oberfläche eine Aussparung aufweist, über welcher die Kontur des Membranbetts ausgebildet ist.

Ggf. können die Aussparungen von der dem Membranbett abgewandten Seite mit einem Füllmaterial ausgefüllt sein, um Hohlräume unter der Glasschicht zu vermeiden. Das Füllmaterial kann insbesondere ein Glas umfassen, welches beispielsweise in Form von Glasfritte eingebracht wird und welches eine niedrigere Schmelztemperatur aufweist als das Glas der Glasschicht. Zusätzlich kann die dem Membranbett abgewandte Unterseite von Substrat und Glas durch Schleifen, Läppen und/oder Polieren eingeebnet werden.

In einer alternativen Ausgestaltung der Erfindung kann das Einebnen Läppen und/oder Polieren zum Einebnen der dem Membranbett abgewandte Unterseite von Substrat und Glas gänzlich ohne vorheriges Unterfüllen des nicht unterstützten Bereichs der Glasschicht erfolgen.

Das Glas der Glasschicht bzw. des Membranbetts weist in einer derzeit bevorzugten Ausgestaltung ein Borosilikatglas, auf, das an den Ausdehnungskoeffizienten des Substratmaterials des Grundkörpers angepasst ist. Besonders geeignete Gläser sind beispielsweise Pyrex 7740, TEMPAX, Hoya SD-2, oder Borofloat 33, welches von der Firma Schott erhältlich ist.

Das Substratmaterial ist vorzugsweise ein Halbleitermaterial, insbesondere Silizium.

Die Glasschicht weist gemäß einer Weiterbildung der Erfindung eine Stärke von nicht weniger als 100 µm, vorzugsweise nicht weniger als 200 µm und weiter bevorzugt nicht weniger als 400 µm auf.

Die Glasschicht weist gemäß einer Weiterbildung der Erfindung eine Materialstärke von nicht mehr als 2000 µm, vorzugsweise nicht mehr als 1400 µm und weiter bevorzugt nicht mehr als 1000 µm auf.

Weiterhin ist es derzeit bevorzugt, wenn das Membranbett eine asphärische Oberflächenkontur aufweist, welche insbesondere der Biegelinie der Messmembran angenähert ist oder dieser entspricht.

Dies ergibt sich in erster Näherung durch waagerechte Ausrichtung des unterstützten Bereichs der Glasschicht während einer Temperung der Glasschicht, um den nicht unterstützten Bereich der Glasschicht absinken zu lassen und während der anschließenden Abkühlung der Glasschicht.

Zur Herstellung der Kontur des Membranbetts kann die Glasschicht beispielsweise im ebenen Zustand mit einer Oberfläche des Grundkörpers, welche die erforderlichen Aussparungen aufweist, verbunden oder lose auf die Oberfläche aufgelegt werden, bevor die Glasschicht dann erwärmt wird, um das Absinken der nicht unterstützten Bereiche einzuleiten.

Im Falle einer vorherigen Verbindung zwischen Glasschicht und Grundkörper kann dies beispielsweise durch anodisches Bonden hergestellt werden.

Sofern die Glasschicht nur lose aufgelegt wird kann die Verbindung zwischen dem Grundkörper und der Glasschicht während des Erwärmens über eine Siliziumoxydschicht an der Oberfläche eines Siliziumgrundkörpers hergestellt werden.

Anstelle der Präparation des Membranbetts auf dem Grundkörper kann die Glasschicht auf einer Matrize, die entsprechende Aussparungen aufweist, erwärmt werden, um die nicht unterstützten Bereiche absinken zu lassen. Dies rechtfertigt aufgrund der Mehrfachverwendung der Matrize einen größeren Fertigungsaufwand für deren Herstellung. Das heißt, es können die Aussparungen unter dem nicht unterstützten Bereich in der Weise gestaltet werden, dass der nicht unterstützte Bereich nach einer bestimmten Absinktiefe beispielsweise lokal unterstützt werden kann, um das Absinken lokal zu begrenzen. Grundsätzlich ist es jedoch derzeit bevorzugt, dass die Kontur ohne Einwirken lokaler Stützen gebildet wird.

In einer Weiterbildung der Erfindung bleibt zumindest der konkave Konturbereich des Membranbetts ohne Einwirkung von Werkzeugen auf die Rauhigkeit der der Messmembran zugewandten Oberfläche der Glasschicht. Die Oberfläche kann dennoch weitgehend glatt sein, und zwar in dem Sinne, dass keine lokalen Erhebungen oder Vertiefungen auftreten, die zu lokalen Spannungen und letztlich zum Bruch der abzustützenden Messmembran führen könnten.

Unabhängig davon, ob das Membranbett auf einer Matrize oder dem Grundkörper geformt ist, kann es vorteilhaft sein, die Oberfläche des unterstützten Bereichs der Glasschicht einzuebnen, nachdem die Kontur in dem nicht unterstützten Bereich geformt ist. Das Einebnen kann beispielsweise durch Schleifen, Läppen und/oder Polieren erfolgen. Bedarf zum Einebnen kann beispielsweise dadurch entstehen, wenn bei dem Absinken des nicht unterstützten Bereichs der Glasplatte die Oberseite und die Unterseite der Glasplatte im unterstützten Bereich unterschiedlichen Randbedingungen ausgesetzt sind, beispielsweise dadurch, dass die Unterseite auf dem Substratkörper aufliegt und dass die Oberseite frei ist, was zu ausgeprägt unterschiedlichen Scherkräften an Oberseite und Unterseite führt.

In einer Weiterbildung der Erfindung ist daher vorgesehen, auf der Oberseite der Glasplatte eine Platte aufzulegen, welche fluchtend mit den Aussparungen des Substratkörpers Aussparungen aufweist, und welche auf den unterstützten Bereichen des Glasköpers aufliegt.

Diese Platte kann nach der Präparation der Kontur des Membranbetts wieder entfernt werden. In einer Variante der Erfindung weist die aufgelegte Platte eine Öffnung mit einem größeren lichten Querschnitt als der nicht unterstützte Bereich auf, so dass jeweils ein ringförmiger Randabschnitt des unterstützten Bereichs der Glasplatte einen nicht unterstützten Bereich umgibt. Dies reicht einerseits dazu aus, eine hinreichend planare Oberseite der Glasschicht in dem ringförmigen Randabschnitt des unterstützten Bereichs zu bewirken, und andererseits erlaubt die Größe des Randbereichs, eine Messmembran darauf zu befestigen. Auf diese Weise kann auf das Entfernen der aufgelegten Platte verzichtet werden.

Mit einem erfindungsgemäß präparierten Membranbett kann die Überlastfestigkeit eines Drucksensors erheblich gesteigert werden. Beispielsweise weist eine Si-Messmembran mit einem Messbereich von 10 mbar mit einer Materialstärke von 30 µm und einem Durchmesser von etwa 5 mm an sich, also ohne Abstützung eine Überlastfestigkeit von etwa 1 bar auf. Wenn die Messmembran sich an dem erfindungsgemäßen Membranbett abstützen kann, steigt die Überlastfestigkeit damit auf mindestens auf 50 bar, insbesondere auf mindestens 100 bar, vorzugsweise auf mindestens und 140 bar und besonders bevorzugt auf mindestens 160 bar.

Die genannten Druckwerte beziehen sich insbesondere auf einen Drucksensor mit einem Messbereich von 10 mbar. Für größere Messbereiche ist es bevorzugt wenn die Überlastfestigkeit ebenfalls größer ist. Beispielsweise sollte ein Drucksensor mit einem Messbereich von 500 mbar eine Überlastfestigkeit von mindestens 100 bar vorzugsweise mindestens 300 bar, weiter bevorzugt mindestens 420 bar und besonders bevorzugt 500 bar aufweisen.

Bei einem Differenzdrucksensor wirkt die Überlastfestigkeit bevorzugt in beide Richtungen.

Der erfindungsgemäße Drucksensor kann ein Absolutdrucksensor, der einen Druck gegenüber Vakuum misst, oder ein Relativdrucksensor sein, der einen Druck gegenüber dem Atmosphärendruck misst.

Besonders relevant ist die vorliegende Erfindung aber für Differenzdrucksensoren, welche die Differenz zwischen einem ersten Druck und einem zweiten Druck erfassen. Denn gerade bei Differenzdrucksensoren ist die Gefahr von großen statischen einseitigen Überlasten gegeben, da die zu messende Druckdifferenz gewöhnlich erheblich kleiner ist als der erste bzw. zweite Druck, dessen Differenz zu erfassen ist. Daher ist der erfindungsgemäße Drucksensor in einer derzeit bevorzugten Ausgestaltung ein Differenzdrucksensor, der eine Messmembran, einen ersten Grundkörper und einen zweiten Grundkörper aufweist,

wobei die Messmembran zwischen dem ersten Grundkörper und dem zweiten Grundkörper angeordnet und mit jedem der beiden Grundkörper unter Einschluss einer ersten Druckkammer und einer zweiten Druckkammer verbunden ist, wobei die erste Druckkammer und die zweite Druckkammer jeweils mindestens einen Kanal durch den ersten bzw. zweiten Grundkörper aufweisen, wobei die Messmembran durch die Kanäle mit einem ersten und einem zweiten Druck beaufschlagbar ist. Die Auslenkung der Membran hängt dann von der Differenz zwischen dem ersten Druck und dem zweiten Druck ab.

Der erfindungsgemäße Drucksensor kann beliebige dem Fachmann geläufige Wandler aufweisen, um eine druckabhängige bzw. differenzdruckabhängige Verformung der Messmembran in ein elektrisches Signal zu wandeln. Hierbei sind insbesondere kapazitive oder (piezo-)resistive Wandler zu nennen. Für kapazitive Wandler sind Elektroden an der Messmembran und am Membranbett vorzusehen, die auf dem Membranbett beispielsweise durch Aufdampfen eines Metalls zu präparieren sind. Messmembranen aus Si können entweder ebenfalls durch Metallisieren oder durch Dotieren mit einer Elektrode versehen werden. Piezoresistive Wandlerstrukturen sind beispielsweise durch Präparieren der Widerstandselemente einer Vollbrücke mittels Dotieren der Membran herzustellen.

Das erfindungsgemäße Verfahren zum Herstellen eines Membranbetts für einen Drucksensor, insbesondere nach einem der vorhergehenden Ansprüche, umfasst die Schritte:(a) Bereitstellen einer ebenen Glasschicht, (b) Auflegen der Glasschicht auf einen Trägerkörper, welcher eine Oberfläche aufweist, welche die Glasschicht unterstützt, wobei die Oberfläche mindestens eine Aussparung aufweist, so dass die Glasschicht im Bereich der Aussparung nicht unterstützt ist, (c) Erwärmen der Glasschicht bis zu einer Temperatur oder einem Temperaturbereich, bei welcher der nicht unterstützte Bereich der Glasschicht absinkt, und (d) Abkühlenlassen der Glasschicht.

In einer Weiterbildung des Verfahrens kann die Glasschicht nach dem Erreichen einer Temperatur, bei welcher der nicht unterstützte Bereich absinkt, für eine Zeit bei dieser Temperatur gehalten werden, so dass die Glasschicht hinreichend weit absinken kann.

Die Haltezeit ist dabei insbesondere von der gewählten Temperatur und der Schichtdicke abhängig. Sie kann für ein Borosilikatglas für Gläser mit einer Stärke von einigen 100 µm beispielsweise durch den Zusammenhang t = a*d+b gegeben sein, wobei der Wert für a bei 750 °C beispielsweise zwischen 0,1 und 0,8, insbesondere zwischen 0,2 und 0,6 liegt, und der Wert für b zwischen -60 und 20, insbesondere zwischen -40 und 0, wobei t die Zeit in Minuten und d die Dicke der Glasschicht in µm ist.

Die Präparation der Membranbettkontur erfolgt vorzugsweise im Waferverband für eine Vielzahl, von Drucksensoren. Die Verbindung der Messmembran mit dem Grundkörper bzw dem Membranbett des Grundkörpers erfolgt vorzugsweise im Waferverband.

Im Falle eines Differenzdrucksensors ist die Messmembran zwischen zwei Grundkörpern bzw. deren Membranbetten anzuordnen. Die Verbindung zwischen der Glasschicht des Membranbetts und dem Silizium der Messmembran kann insbesondere über anodisches Bonden erfolgen.

Sofern eine Vielzahl von Sensoren parallel im Waferverbund gefertigt werden, folgt abschließend ein Vereinzeln der Sensoren, beispielsweise durch Sägen.

Die Erfindung wird nun anhand eines in den Zeichnungen dargestellten Ausführungsbeispiels erläutert.

Es zeigt:
- Fig. 1:: Eine schematische Schnittdarstellung von Präparationsschritten zum Präparieren der Membranbetten und zur Herstellung eines erfindungsgemäßen Relativdrucksensors;
- Fig. 2:: einen Längsschnitt durch ein Ausführungsbeispiel einer Charge erfindungsgemäßer Differenzdrucksensoren vor der Vereinzelung, und
- Fig. 3:: eine Darstellung von Messkurven von Membranbettkonturen erfindungsgemäßer Drucksensoren.

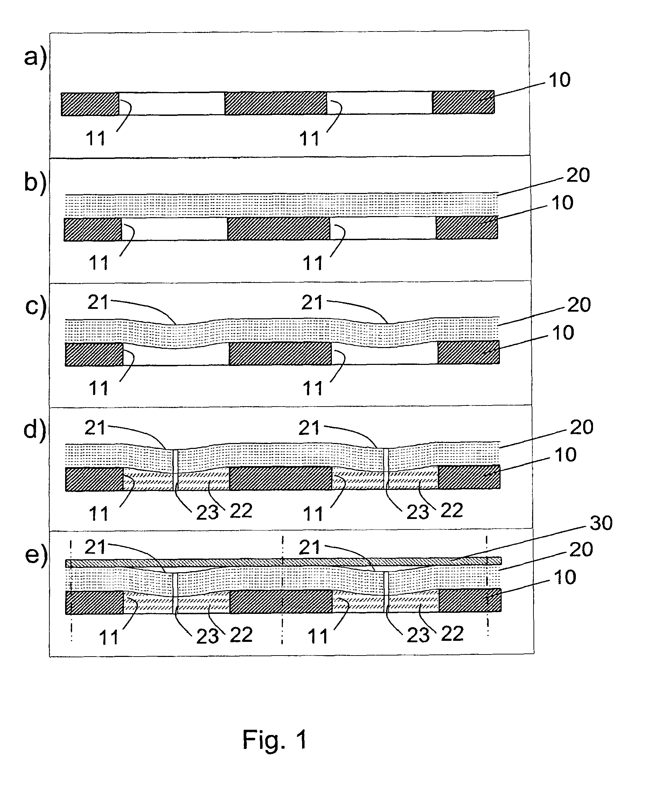

Die in Fig. 1 dargestellte Reihenfolge von Fertigungsschritten beginnt in Schritt (a) mit einem Si-Wafer 10 mit einer Stärke von 420 µm, in welchen in einem ersten Schritt Vertiefungen 11 präpariert werden. Die Vertiefungen 11 können beispielsweise durch (Ultraschall-)Bohren und/oder Ätzen gefertigt werden. Auf Präzision kommt es bei der Fertigung der Vertiefungen nur insoweit an, als die Vertiefungen 11 nicht das Verhalten des nicht unterstützten Bereichs einer Glasplatte während der folgenden Präparationsschritte beeinträchtigen dürfen. In einer Grundvariante des erfindungsgemäßen Verfahrens bedeutet dies lediglich, dass die Querschnittsfläche der Vertiefung bzw. Aussparung zur angestrebten Form einer Messmembran passen muss. Insoweit, als die Messmembran hier als planare Platte aufgelegt wird, ist die Möglichkeit gegeben, eine Kreissymmetrie in der Messmembran zu realisieren. Die Vertiefungen 11 können einen Durchmesser von einigen mm, beispielsweise 3 bis 10 mm, vorzugsweise 4 bis 6 mm aufweisen. Im Beispiel beträgt der Durchmesser 5 mm.

In einem zweiten Schritt (b) wird eine Glasplatte 20 mit einer Stärke von einigen 100 µm auf den Siliziumwafer 10 aufgebracht, wobei die Glasplatte unter Reinraumbedingungen lose auf den Siliziumwafer aufgelegt wird. Die Glasplatte weist ein Borosilikatglas auf, beispielsweise Borofloat 33. Im Ausführungsbeispiel weist die Glasplatte eine Stärke von etwa 500 µm auf.

In einem dritten Schritt (c) wird der Stapel mit dem Substratkörper 10 und der Glasplatte 20 über einen Zeitraum etwa 1,5 h von Raumtemperatur auf 750°C geheizt und dann für etwa 3 h bei dieser Temperatur gehalten. In dieser Zeit sinkt einerseits der nicht unterstützte Bereich der Glasplatte hinreichend tief ab, wobei eine Kontur 21 entsteht die als Membranbett zum Abstützen einer Messmembran im Überlastfall geeignet ist, und andererseits entsteht eine mechanisch feste Verbindung zwischen der Glasplatte und dem Substratkörper, wobei Si-Atome der Oberfläche des Substratkörpers oxidiert werden. Anschließend kann der Stapel über mehrere Stunden Abkühlen

Die derzeit verwendete Temperatur ergibt sich aus einer Durchführung des Heizverfahrensschritts in einer Atmosphäre aus Umgebungsluft in einem Ofen mit einer Schamottauskleidung. Bei einer Durchführung des Heizverfahrensschritts in einer kontrollierten Atmosphäre, beispielsweise Schutzgas, und/oder einer Heizung unter Reinraumbedingungen, kann die Temperatur sicher noch erhöht werden, wodurch dann auch die Zeit des Heizschritts bei gegebenen geometrischen Randbedingungen verkürzt werden kann.

In einem vierten Schritt (d) können verbleibende Hohlräume unter den Konturen 21 mit einem Füllmaterial, insbesondere mit einem Glas 22 aufgefüllt werden, wobei das Glas beispielsweise in Form einer Fritte eingebracht werden kann, deren Schmelzpunkt unterhalb dem Erweichungspunkt des Glases der Glasplatte 10 liegt. Nach dem Aufschmelzen der Fritte und der darauf folgenden Abkühlung kann die den Membranbetten abgewandte Unterseite durch Schleifen oder Läppen eingeebnet werden. Durch die Schichtfolge werden mit mikromechanischen Präparationsmethoden, beispielsweise mit Ultraschallbohren, Kanäle 23 präpariert, die sich jeweils von der Unterseite des Grundkörpers, welcher dem Substratkörper 10, die Glasschicht 10 und die Glasfüllung 23 umfasst, zu der Kontur 21 des Membranbetts erstreckt.

In einem fünften Schritt (e) wird ein Messmembranwafer 30, der insbesondere Silizium aufweist, mittels anodischen Bondens mit den Grundkörpern verbunden im Waferverband verbunden. Anschließend können die hier dargestellten Relativdrucksensoren durch Sägen entlang der dargestellten senkrechten Linien vereinzelt werden.

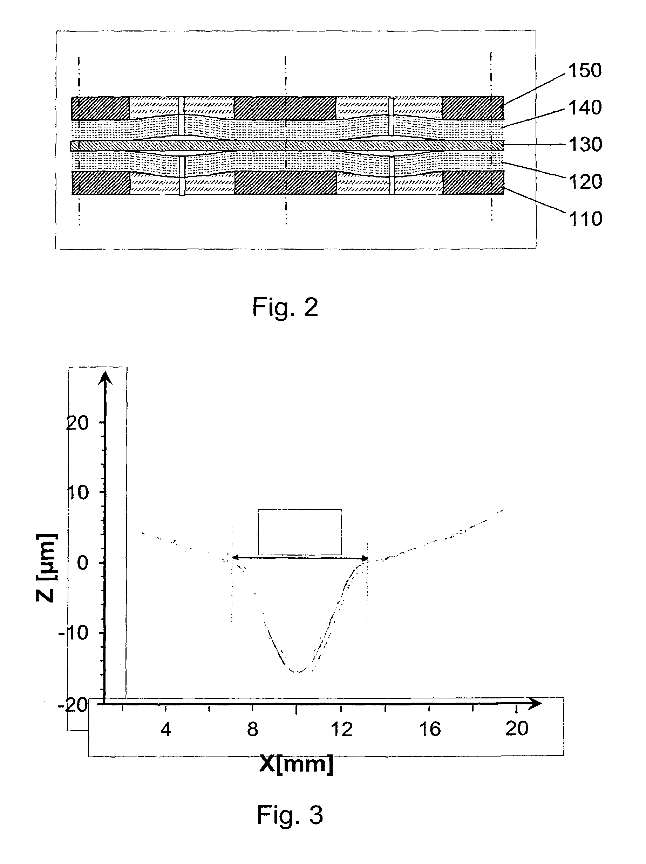

Fig. 2 zeigt einen Längsschnitt durch erfindungsgemäße Differenzdrucksensoren vor deren Vereinzelung. Zur Herstellung von Differenzdrucksensoren wird ein Messmembranwafer 130, welcher insbesondere ein Silizium aufweist, zwei Grundkörpern im Waferverband mittels anodischen Bondens befestigt. Die Grundkörper werden zuvor jeweils im Waferverband entsprechend den Präparationsschritten a bis d aus Fig.1 jeweils mit einem Substratkörper 110, 150 und einer Glasplatte 120, 140 gefertigt. Einzelne Differenzdrucksensoren werden schließlich durch Vereinzelung entlang der vertikalen gestrichelten Linien erhalten.

Fig. 3 zeigt schließlich Messdaten von Konturen der Erfindungsgemäßen Membranbetten, wobei der nicht abgestützte Bereich durch die beiden vertikalen punktierten Linien gekennzeichnet ist und einen Durchmesser von 5 mm aufweist.

Im Ergebnis können definierte asphärische Konturen nach der beschriebenen Vorgehensweise präpariert werden, die geeignet sind Messmembranen im Überlastfall abzustützen. Die vorliegenden Messdaten stammen von Membranbetten, bei denen die obere Oberfläche der Glasplatte während des Absenkens frei war. In diesem Fall ercheint es geboten, den unterstützten Bereich der Glasplatte vor der Montage der Messmembran einzuebnen, beispielsweise durch Schleifen, Läppen, und/oder Polieren. In einer Weiterbildung des Verfahrens wird während der Präparation der Konturen, eine Platte mit Aussparungen, welche mit denen des Substratkörpers fluchten, auf die Glasplatte aufgelegt, was bewirkt, dass die unterstützten Bereiche der Glasplatte nach der Präparation der Konturen im wesentlichen eben sind, so dass sich ein weiteres Einebnen erübrigt.

## Patentansprüche

1. Drucksensor, umfassend mindestens einen Grundkörper, mindestens eine Messmembran (30), und einen Wandler, wobei die Messmembran ein Halbleitermaterial aufweist, wobei die Messmembran unter Einschluss einer Druckkammer an dem Grundkörper befestigt ist, wobei die Messmembran mit mindestens einem Druck beaufschlagbar ist und druckabhängig elastisch verformbar ist, wobei der Wandler ein von der Verformung der Messmembran (30) abhängiges elektrisches Signal bereitstellt, wobei der Grundkörper ein Membranbett (21) aufweist, an welchem die Messmembran im Falle einer Überlast anliegt, um die Messmembran abzustützen, wobei das Membranbett eine Glasschicht (20) aufweist, deren Oberfläche der Messmembran (30) zugewandt ist, und eine Wand der Druckkammer bildet, wobei die Oberfläche der Glasschicht (20) eine Kontur aufweist, die geeignet ist, die Messmembran (30) im Falle einer Überlast abzustützen, **dadurch gekennzeichnet,**
**dass** die Kontur des Membranbetts erhältlich ist durch Durchbiegen eines nicht unterstützten Bereichs einer Glasplatte bei erhöhter Temperatur aufgrund der Schwerkraft des nicht unterstützten Bereichs der Glasplatte und anschließendem Abkühlen der Glasplatte,
wobei der Grundkörper einen Substratkörper aufweist, der eine der Glasschicht zugewandte Oberfläche aufweist, welche die Glasschicht unterstützt, wobei die Oberfläche eine Aussparung aufweist, über welcher die Kontur des Membranbetts ausgebildet ist.

2. Drucksensor nach Anspruch 1, wobei die Aussparungen rückseitig mit einem Füllmaterial ausgefüllt sind, um Hohlräume unter der Glasschicht zu vermeiden.

3. Drucksensor nach Anspruch 2, wobei das Füllmaterial insbesondere ein Glas umfasst welches eine niedrigere Schmelztemperatur aufweist als das Glas der Glasschicht.

4. Drucksensor nach einem der vorhergehenden Ansprüche, wobei de Glasschicht eine Stärke von nicht weniger als 100 µm, vorzugsweise nicht weniger als 200 µm und weiter bevorzugt nicht weniger als 400 µm aufweist.

5. Drucksensor nach einem der vorhergehenden Ansprüche, wobei die Glasschicht eine Stärke von nicht mehr als 2000 µm, vorzugsweise nicht mehr als 1400 µm und weiter bevorzugt nicht mehr als 1000 µm aufweist.

6. Drucksensor nach einem der vorhergehenden Ansprüche wobei das Membranbett eine asphärische Oberflächenkontur aufweist, welche insbesondere der Biegelinie der Messmembran angenähert ist oder dieser entspricht.

7. Verfahren zur Präparation des Membranbetts eines Drucksensors, insbesondere nach einem der vorhergehenden Ansprüche, umfassend die Schritte:
(a) Bereitstellen einer ebenen Glasschicht,
(b) Auflegen der Glasschicht auf einen Trägerkörper, welcher eine Oberfläche aufweist, welche die Glasschicht unterstützt, wobei die Oberfläche mindestens eine Aussparung aufweist, so dass die Glasschicht im Bereich der Aussparung nicht unterstützt ist,
(c) Erwärmen der Glasschicht bis zu einer Temperatur oder einem Temperaturbereich, bei welcher der nicht unterstützte Bereich der Glasschicht absinkt, und
(d) Abkühlenlassen der Glasschicht.

8. Verfahren nach Anspruch 7, wobei die Glasschicht nach dem Erreichen einer Temperatur, bei welcher der nicht unterstützte Bereich absinkt, für eine Haltezeit bei dieser Temperatur gehalten werden, so dass die Glasschicht hinreichend weit absinken kann.

9. Verfahren nach einem der Ansprüche 7 bis 8, wobei die Präparation der Membranbettkontur im Waferverband für eine Vielzahl, von Membranbetten erfolgt.

10. Verfahren zum Herstellen eines Drucksensors, umfassend:
Präparieren eines Membranbetts gemäß dem Verfahren nach einem der Ansprüche 8 bis 11 und Fügen einer Messmembran mit dem Grundkörper bzw. der Glasschicht des Grundkörpers, welche das Membranbett bildet.

## Claims

1. Pressure sensor, comprising at least a meter body, at least one measuring diaphragm (30) and a converter, wherein the measuring diaphragm has a semi-conductor material, wherein the measuring diaphragm, including a pressure chamber, is attached to the meter body, wherein the measuring diaphragm can be exposed to at least one pressure and can be deformed elastically depending on the pressure, wherein the converter provides an electrical signal that is dependent upon the deformation of the measuring diaphragm (30), wherein the meter body has a diaphragm bed (21) on which the measuring diaphragm rests in the event of overload in order to support the measuring diaphragm, wherein the diaphragm bed has a glass layer (20) the surface of which points towards the measuring diaphragm (30) and forms a wall of the pressure chamber, wherein the surface of the glass layer (20) has a contour that is suitable for supporting the measuring diaphragm (30) in the event of overload, **characterized in that**
the contour of the diaphragm bed is obtained by the bending of a non-supported section of the glass plate at a high temperature, brought about by the gravitational force of the non-supported section of the glass plate and the subsequent cooling of the glass plate, wherein the meter body has a substrate body which has a surface facing towards the glass layer that supports the glass layer, wherein the surface has a cavity over which the contour of the diaphragm bed is formed.

2. Pressure sensor as claimed in Claim 1, wherein the cavities are filled with a filling material at the back to avoid cavities under the glass layer.

3. Pressure sensor as claimed in Claim 2, wherein the filling material in particular comprises a glass which has a lower melting temperature than the glass of the glass layer.

4. Pressure sensor as claimed in one of the previous claims, wherein the glass layer has a thickness of not less than 100 µm, preferably not less than 200 µm and more preferably not less than 400 µm.

5. Pressure sensor as claimed in one of the previous claims, wherein the glass layer has a thickness of not more than 2000 µm, preferably not more than 1400 µm and more preferably not more than 1000 µm.

6. Pressure sensor as claimed in one of the previous claims, wherein the diaphragm bed has an aspherical surface contour which notably approaches the bending line of the measuring diaphragm or is equivalent to this line.

7. Procedure for preparing the diaphragm bed of a pressure sensor, particularly as claimed in one of the previous claims, comprising the following steps:
(a) Provision of an even glass surface,
(b) Application of the glass layer on a support body which has a surface that supports the glass layer, wherein the surface has at least one cavity such that the glass layer is not supported in the area of the cavity,
(c) Heating of the glass layer up to a temperature or a temperature range at which the non-supported section of the glass layer drops, and
(d) Cooling of the glass layer.

8. Procedure as claimed in Claim 7, wherein, after reaching the temperature at which the non-supported section drops, the glass layer is held at this temperature for a holding period so that the glass layer can drop to a sufficient degree.

9. Procedure as claimed in one of the Claims 7 to 8, wherein the preparation of the diaphragm bed contour takes place in a wafer assembly for several diaphragm beds.

10. Procedure for manufacturing a pressure sensor, comprising:
Preparation of a diaphragm bed in line with the procedure as claimed in one of the Claims 7 to 9 and joining of a measuring diaphragm with the meter body or the glass layer of the meter body that forms the diaphragm bed.

## Revendications

1. Capteur de pression, comprenant au moins un corps de base, au moins une membrane de mesure (30) et un convertisseur, la membrane de mesure étant constituée d'un matériau semi-conducteur, la membrane de mesure étant fixée sur le corps de base comprenant une chambre de pression, la membrane de mesure pouvant être soumise à au moins une pression et pouvant être déformée de façon élastique en fonction de la pression, le convertisseur mettant à disposition un signal électrique dépendant de la déformation de la membrane de mesure (30), le corps de base comportant un lit de membrane (21), contre lequel s'appuie la membrane de mesure en cas de surcharge, afin de supporter la membrane de mesure, le lit de membrane présentant une couche de verre (20), dont la surface est orientée vers la membrane de mesure (30), et forme une paroi de la chambre de pression, la surface de la couche de verre (20) présentant un contour, qui est adapté pour supporter la membrane de mesure (30) en cas de surcharge, **caractérisé en ce**
**que** le contour du lit de membrane est obtenu par la flexion d'une zone non supportée d'une plaque de verre à une température élevée, au moyen de la force de gravité de la zone non supportée de la plaque de verre, suivie du refroidissement de la plaque de verre, le corps de base présentant un corps de substrat, qui présente une surface orientée vers la couche de verre, laquelle supporte la couche de verre, la surface comportant un évidement à travers lequel le contour du lit de membrane est formé.

2. Capteur de pression selon la revendication 1, pour lequel les évidements à l'arrière sont remplis par une matière de remplissage, afin d'éviter des cavités dans la couche de verre.

3. Capteur de pression selon la revendication 2, pour lequel la matière de remplissage comprend notamment un verre présentant une température de fusion inférieure au verre de la couche de verre.

4. Capteur de pression selon l'une des revendications précédentes, pour lequel la couche de verre présente une épaisseur minimale de 100 µm, de préférence minimale de 200 µm et particulièrement de préférence minimale de 400 µm.

5. Capteur de pression selon l'une des revendications précédentes, pour lequel la couche de verre présente une épaisseur maximale de 2 000 µm, de préférence maximale de 1 400 µm et particulièrement de préférence maximale de 1 000 µm.

6. Capteur de pression selon l'une des revendications précédentes, pour lequel le lit de membrane présente un contour de surface asphérique, qui s'approche notamment de la courbe de flexion élastique de la membrane de mesure, ou qui correspond à celle-ci.

7. Procédé destiné à la préparation du lit de membrane d'un capteur de pression, notamment selon l'une des revendications précédentes, comprenant les étapes suivantes :
(a) Mise à disposition d'une couche de verre plane,
(b) Application de la couche de verre sur un corps support, lequel présente une surface, qui supporte la couche de verre, la surface présentant au moins un évidement de telle sorte que la couche de verre n'est pas supportée dans la zone de l'évidement,
(c) Échauffement de la couche de verre à une température ou une plage de température, à laquelle la zone non supportée de la couche de verre s'affaisse, et
(d) Refroidissement de la couche de verre.

8. Procédé selon la revendication 7, pour lequel la couche de verre, après l'atteinte d'une température à laquelle la zone non supportée s'affaisse, est maintenue pendant un temps d'arrêt à cette température, si bien que la couche de verre puisse s'affaisser avec une amplitude suffisante.

9. Procédé selon l'une des revendications 7 à 8, pour lequel la préparation du contour du lit de membrane s'effectue dans une tranche de silicium pour un grand nombre de lits de membrane.

10. Procédé destiné à la fabrication d'un capteur de pression, comprenant :
Préparation d'un lit de membrane conformément au procédé selon l'une des revendications 7 à 9 et assemblage d'une membrane de mesure avec le corps de base ou la couche de verre du corps de base, lequel forme le lit de membrane.
